## Europäisches Patentamt

(19) **European Patent Office**

**Office européen des brevets**

(11) Veröffentlichungsnummer: **0 110 942**
**B1**

(12) **EUROPÄISCHE PATENTSCHRIFT**

(45) Veröffentlichungstag der Patentschrift:
**19.03.86**

(51) Int. Cl.⁴: **B 63 B 35/32**

(21) Anmeldenummer: **83901810.8**

(22) Anmeldetag: **07.06.83**

(86) Internationale Anmeldenummer:
**PCT/DE 83/00104**

(87) Internationale Veröffentlichungsnummer:
**WO 83/04399 (22.12.83 Gazette 83/29)**

(54) **ÖLSAMMELSCHIFF MIT ZWEI SCHIFFSRUMPFHÄLFTEN.**

(30) Priorität: **08.06.82 DE 8216568 U**

(43) Veröffentlichungstag der Anmeldung:
**20.06.84 Patentblatt 84/25**

(45) Bekanntmachung des Hinweises auf die Patenterteilung:
**19.03.86 Patentblatt 86/12**

(84) Benannte Vertragsstaaten:
**DE FR GB NL SE**

(56) Entgegenhaltungen:
**EP - A - 0 001 408**
**FR - A - 489 112**
**FR - A - 552 174**
**FR - A - 2 032 062**
**US - A - 2 715 380**
**US - A - 3 145 681**

(73) Patentinhaber: **LÜHRING, Claus, Lessingstrasse 26,**
**D-2880 Brake/Unterweser (DE)**
Patentinhaber: **FRIES, Ortwin, Am Helgen 24,**
**D-2880 Brake/Unterweser (DE)**

(72) Erfinder: **LÜHRING, Claus, Lessingstrasse 26,**
**D-2880 Brake/Unterweser (DE)**
Erfinder: **FRIES, Ortwin, Am Helgen 24,**
**D-2880 Brake/Unterweser (DE)**

(74) Vertreter: **Goddar, Heinz J., Dr. et al, FORRESTER &**
**BOEHMERT Widenmayerstrasse 4/I,**
**D-8000 München 22 (DE)**

LIBER, STOCKHOLM 1986

## Beschreibung

Die Erfindung betrifft ein Ölsammelschiff mit zwei durch ein Scharnier unmittelbar miteinander verbundenen Schiffsrumpfhälften, Öl-Aufsaugeinrichtungen, welche das durch die Schiffsrumpfhälften in gespreiztem Zustand zusammengeschobene Öl aufnehmen, einer die Schiffsrumpfhälften in ungespreiztem geschlossenen Zustand parallel zur Schiffslängsachse haltenden Verriegelungseinrichtung sowie Antriebseinrichtungen zum Antreiben und Manövrieren des Schiffes sowohl in geschlossenem als auch in gespreiztem Zustand, wobei die Aufbauten sich im wesentlichen auf einer Schiffsrumpfhälfte befinden.

Aus der DE-C- 27 44 517 ist ein Ölsammelschiff dieser Art bekannt, bei dem die beiden Schiffsrumpfhälften, durch ein am Heck vorgesehenes Gelenk unmittelbar miteinander verbunden sind, wobei die Verriegelungseinrichtung am Backendschott vorgesehen ist. Das Gelenk ist in Form eines Scharniers mit entsprechendem Scharnierzapfen ausgebildet.

Grundsätzlich hat sich das bekannte Ölsammelschiff durchaus bewährt. Es hat sich allerdings als wünschenswert herausgestellt, insbesondere beim Bau größerer Einheiten, die Kraftübertragung zwischen den Schiffsrumpfhälften zu verbessern, wobei zu berücksichtigen ist, daß bei verhältnismäßig großen Einheiten und relativ grobem Seegang durch die Schiffsrumpfhälften in gespreiztem Zustand erhebliche Relativbewegungen ausgeführt werden, welche zu beträchtlichen Kräften im Scharnierbereich führen.

Der Erfindung liegt die Aufgabe zugrunde, das bekannte Ölsammelschiff dahingehend weiterzubilden, daß die Kraftübertragung im Scharnierbereich verbessert wird.

Erfindungsgemäß wird diese Aufgabe dadurch gelöst, daß die die Aufbauten aufweisende eine Schiffsrumpfhälfte im Scharnierbereich oberhalb einer im wesentlichen horizontalen Trennebene die andere Schiffsrumpfhälfte im wesentlichen über deren gesamte Breite übergreift; und daß beide Schiffsrumpfhälften in der Trennebene einander zugewandte horizontale Scharnierflächen aufweisen, die sich im wesentlichen über die gesamte Breite der jeweiligen Schiffsrumpfhälfte im Scharnierbereich erstrecken.

Dabei kann vorgesehen sein, daß die Scharnierfläche der einen Schiffsrumpfhälfte im wesentlichen die Form einer Kreisscheibe hat, deren Durchmesser im wesentlichen gleich der gesamten Schiffsbreite ist.

Weiterhin schlägt die Erfindung gegebenenfalls vor, daß das Scharnier am Bug des Schiffes im Bereich des Backendschotts vorgesehen ist.

Erfindungsgemäß kann auch vorgesehen sein, daß der Bug des Schiffes im wesentlichen entsprechend der Kreisform des Scharnierbereiches gestaltet ist.

Weiterhin schlägt die Erfindung auch vor, daß als einzige Antriebseinrichtung am Heck jeder Schiffsrumpfhälfte jeweils ein Manöverpropeller oder dergleichen angeordnet ist.

Schließlich kann auch vorgesehen sein, daß im Vorschiff ein zusätzlicher Manöverantrieb (Jet oder dergleichen) angeordnet ist.

Durch die erfindungsgemäße Maßnahme, ein "flächiges" Scharnier vorzusehen, ist eine beträchtlich verbesserte Kraftübertragung im Scharnierbereich gewährleistet, da die Kräfte zwischen den beiden Schiffsrumpfhälften nicht allein durch den Scharnierzapfen übertragen werden, sondern hierzu der flächige Kontakt der Scharnierflächen der beiden Schiffsrumpfhälften zur Verfügung steht, woraus erheblich günstigere Hebelverhältnisse im Scharnierbereich resultieren. Weiterhin läßt sich das erfindungsgemäß vorgesehene Scharnier in besonders vorteilhafter Weise am Bug des Schiffes anordnen, wobei dem Bug eine strömungsgünstige, abgesehen von der Trennebene geschlossene Form gegeben werden kann. Diese Konstruktionsweise bietet auch noch den weiteren Vorteil, daß dann als Antriebseinrichtung zum Manövrieren des Schiffes sowohl im geschlossenen als auch im gespreizten Zustand jeweils ein Manöverpropeller oder dergleichen am Heck jeder Schiffsrumpfhälfte ausreicht, so daß also auf Nebenantriebseinrichtungen, wie sie beim Stand der Technik vorgesehen sind, gegebenenfalls verzichtet werden kann. Die Verriegelungseinrichtung befindet sich bei dieser Bauweise natürlich vorzugsweise nahe dem Heck des Schiffes.

Das erfindungsgemäß vorgesehene Ölsammelschiff kann im übrigen in derselben Weise zu Transportzwecken, insbesondere auch als Bohrinselversorger oder dergleichen, eingesetzt werden, wie dies bei dem Ölsammelschiff nach der DE-PS 27 44 517 der Fall ist, wobei diesbezüglich, auch hinsichtlich der weiteren Hilfseinrichtungen des Schiffes etc., auf die DE-PS 27 44 517 zur Erläuterung Bezug genommen wird.

Weitere Merkmale und Vorteile der Erfindung ergeben sich aus der nachstehenden Beschreibung, in der ein Ausführungsbeispiel anhand der schematischen Zeichnung im einzelnen erläutert ist. Dabei zeigt:

Fig. 1 ein Ausführungsbeispiel eines Ölsammelschiffes nach der Erfindung in der Seitenansicht;

Fig. 2 das Ölsammelschiff von Fig. 1 in der Draufsicht; und

Fig. 3 das in Fig. 1 und 2 in geschlossenem Zustand gezeigte Ölsammelschiff im gespreizten Zustand.

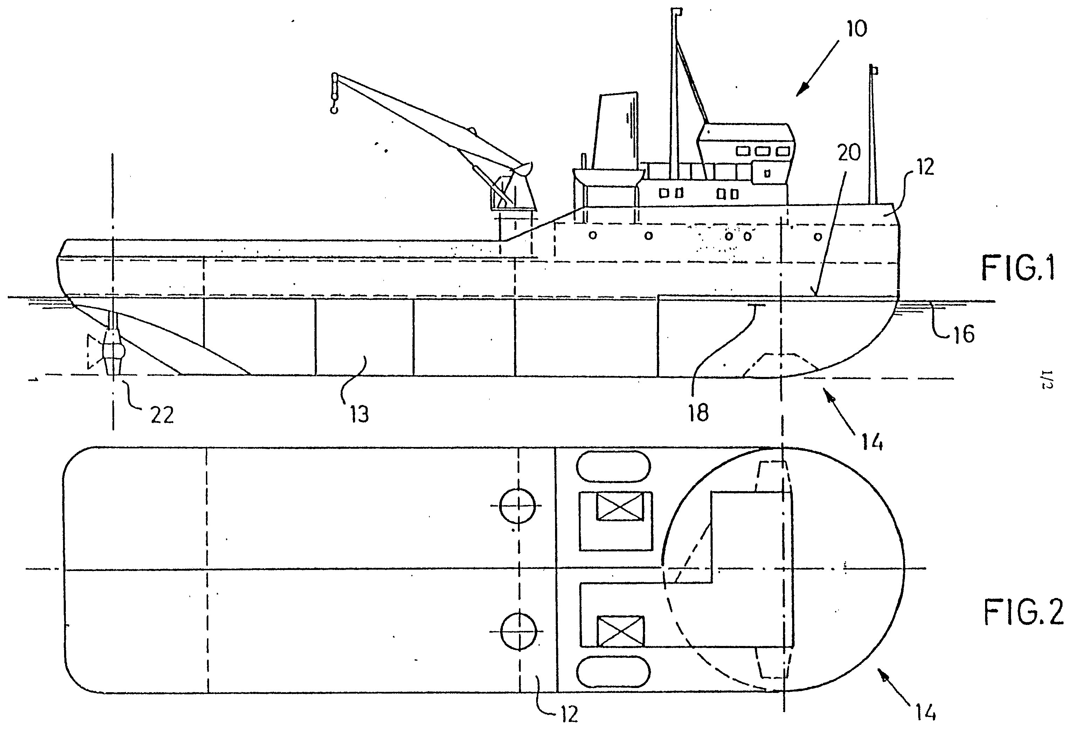

Wie die Zeichnung erkennen läßt, weist das dort gezeigte Ausführungsbeispiel des erfindungsgemäßen Ölsammelschiffes eine erste, im wesentlichen die gesamten Aufbauten 10 tragende Schiffsrumpfhälfte 12 sowie eine zweite Schiffsrumpfhälfte 13 auf. In einem am Bug des Schiffes vorgesehenen Scharnierbereich 14 übergreift die Schiffsrumpfhälfte 12 in der aus der Zeichnung ohne weiteres ersichtlichen Weise über die gesamte, durch die Breite beider Schiffsrumpfhälften 12, 13 definierte Schiffsbreite die keine Aufbauten aufweisende Schiffsrumpfhälfte 13, wobei die beiden Schiffsrumpfhälften in einer Trennebene 16, die horizontal angeordnet ist, einander zugewandte Scharnierflächen 18, 20 aufweisen, die im Fall der die Aufbauten aufweisenden Schiffsrumpfhälfte 12 im wesentlichen die Form einer Kreisfläche hat, deren Durchmesser gleich der gesamten Schiffsbreite ist. Der Bug des Schiffes ist, wie aus Fig. 1 und 2 erkennbar, abgesehen von der horizontalen Trennebene 16 im wesentlichen geschlossen - kreisförmig ausgebildet, wobei die Bugform im wesentlichen durch die Form des Scharnierbereiches 14 definiert ist.

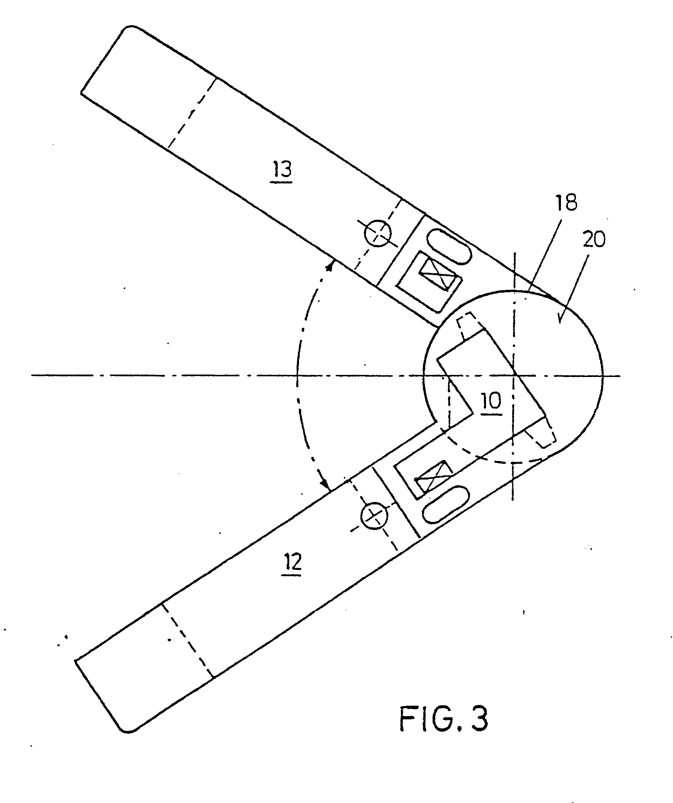

Fig. 1 läßt weiterhin erkennen, daß am Ende jeder Schiffsrumpfhälfte ein Manöverpropeller 22 angeordnet ist. Die beiden Manöverpropeller 22 dienen in Normalfahrt des Schiffes, wobei also beide Schiffsrumpfhälften durch eine nicht gezeigte - Verriegelungseinrichtung miteinander verriegelt sind, zum Antrieb und zum Manövrieren des Schiffes. Auch in der ölsammelstellung, die in Fig. 3 gezeigt ist, und bei der die beiden Schiffsrumpfhälften um etwa 65° gegeneinander aufgespreizt sind, bewirken die Manöverpropeller den Antrieb und die Manövrierung des Schiffes. Im Vorschiff befindet sich ein zusätzlicher Manöverantrieb 23 in Form eines Jetsoder dergleichen.

Das beschriebene Ausführungsbeispiel des Ölsammelschiffes kann in geschlossenem Zustand für allgemeine Transportzwecke, insbesondere auch zur Bohrinselversorgung, aber auch unter anderem als Taucherbasisschiff und als Tonnenleger (wegen der ausgezeichneten Stabilität und der Fähigkeit, Lee zu machen, im aufgespreizten Zustand), verwendet werden. Die in beiden Schiffsrumpfhälften selbstverständlich vorhandenen Öl-Auffangeinrichtungen einschließlich der erforderlichen Sammeltanks gewährleisten im Bedarfsfall die Verwendbarkeit als Ölsammelschiff, wobei diesbezüglich zur weiteren Erläuterung in vollem Umfang auf die DE-C-27 44 517 Bezug genommen wird.

## Patentansprüche

1. Ölsammelschiff mit zwei durch ein Scharnier unmittelbar miteinander verbundenen Schiffsrumpfhälften, Öl-Aufsaugeinrichtungen, welche das durch die Schiffsrumpfhälften in gespreiztem Zustand zusammengeschobene Öl aufnehmen, einer die Schiffsrumpfhälften in ungespreiztem geschlossenen Zustand parallel zur Schiffslängsachse haltenden Verriegelungseinrichtung sowie Antriebseinrichtungen (22) zum Antreiben und Manövrieren des Schiffes sowohl in geschlossenem als auch in gespreiztem Zustand, wobei die Aufbauten sich im wesentlichen auf einer Schiffsrumpfhälfte befinden, dadurch gekennzeichnet, daß die die Aufbauten (10) aufweisende eine Schiffsrumpfhälfte (12) im Scharnierbereich (14) oberhalb einer im wesentlichen horizontalen Trennebene (16) die andere Schiffsrumpfhälfte (13) im wesentlichen über deren gesamte Breite übergreift; und daß beide Schiffsrumpfhälften (12, 13) in der Trennebene (16) einander zugewandte horizontale Scharnierflächen (18, 20) aufweisen, die sich im wesentlichen über die gesamte Breite der jeweiligen Schiffsrumpfhälfte im Scharnierbereich erstrecken.

2. Ölsammelschiff nach Anspruch 1, dadurch gekennzeichnet, daß die Scharnierfläche (20) der einen Schiffsrumpfhälfte (12) im wesentlichen die Form einer Kreisscheibe hat, deren Durchmesser im wesentlichen gleich der gesamten Schiffsbreite ist.

3. Ölsammelschiff nach Anspruch 1 oder 2, dadurch geknnzeichnet, daß das Scharnier am Bug des Schiffes im Bereich des Backendschotts vorgesehen ist.

4. Ölsammelschiff nach Anspruch 3, dadurch gekennzeichnet, daß der Bug des Schiffes im wesentlichen entsprechend der Kreisform des Scharnierbereiches (14) gestaltet ist.

5. Ölsammelschiff nach Anspruch 3 oder 4, dadurch gekennzeichnet, daß als einzige Antriebseinrichtung am Heck jeder Schiffsrumpfhälfte (12, 13) jeweils ein Manöverpropeller (22) oder dergleichen angeordnet ist.

6. Ölsammelschiff nach Anspruch 3 oder 4, dadurch gekennzeichnet, daß im Vorschiff ein zusätzlicher Manöverantrieb (Jet oder dergleichen) angeordnet ist.

## Revendications

1.- Bateau collecteur de pétrole comportant deux demicoques réunies directement par une charniére, des moyens d'aspiration de pétrole qui prennent le pétrole rassemblé par les demi-coques à l'état écarté, un moyen de verrouillage maintenant les demi-coques à l'état fermé, non ecarté, paralléles à l'axe longitudinal du bateau et des moyens de propulsion (22) pour la propulsion et la manoeuvre du bateau aussi bien à l'état fermé qu'é l'état écarté, les superstructures se trouvant essentiellement sur une demicoque, caractérisé par le fait que la demi-coque (12) presentant les superstructures (10), dans la zone de la charniére (14), au-dessus d'un plan de séparation (16) sensiblement horizontal, recouvre l'autre demi-coque (13) sensiblement sur toute sa largeur, et que les deux demicoques (12, 13) presentent, dans le plan de séparation (16), des surfaces de charnière horizontales en regard (18, 20) qui s'étendent dans la zone de la charnière sensiblement sur toute la largeur de chaque demi-coque.

2.- Bateau collecteur de pétrole selon la revendication 1, caractérisé par le fait que la surface de charnière (20) d'une demi-coque (12) a sensiblement la forme d'un disque circulaire dont le diamètre est sensiblement egal à la largeur totale du bateau.

3.- Bateau collecteur de petrole selon l'une des revendications 1 et 2, caractérisé par le fait que la charnière est prévue à l'avant du bateau dans la zone de la cloison d'extrémite de la proue.

4.- Bateau collecteur de pétrole selon la revendication 3, caractérisé par le fait que l'avant du bateau a une forme correspondant sensiblement à la forme circulaire de la zone de la charnière (14).

5.- Bateau collecteur de pétrole selon l'une des revendications 3 et 4, caractérisé par le fait qu'une hélice de manoeuvre (22) ou un dispositif semblable est placé, comme seul moyen de propulsion, à l'arrière de chaque demicoque (12, 13).

6.- Bateau collecteur de pétrole selon l'une des revendications 3 et 4, caractérisé par le fait qu'à l'avant est placé un propulseur supplémentaire de manoeuvre (jet ou dispositif semblable).

**Claims**

1. An oil collecting ship comprising two body halves interconnected directly by a hinge, oil suction means which pick up the oil pushed together by the body halves in the open state, a locking means holding the body halves in the unopen closed state parallel to the longitudinal axis of the ship, and propulsion means (22) for propelling and manoeuvring the ship both in the closed and in the open state, the superstructure being situated substantially on one body half, characterised in that the one body half (12) provided with the superstructure (10) engages over the other body half (13) over substantially its entire width in the hinge zone (14) above a substantially horizontal dividing plane (16); and in that the two body halves (12, 13) have horizontal hinge surfaces (18, 20) which face one another in the dividing plane (16) and which extend substantially over the entire width of the associated body half in the hinge zone.

2. An oil collecting ship according to claim 1, characterised in that the hinge surface of one body half (20) is substantially in the form of a circular disc whose diameter is substantially equal to the entire width of the ship.

3. An oil collecting ship according to claim 1 or 2, characterised in that the hinge is provided at the bow of the ship in the region of the forecastle end bulkhead.

4. An oil collecting ship according to claim 3, characterised in that the bow of the ship is shaped to correspond substantially to the circular shape of the hinge area (14).

5. An oil collecting ship according to claim 3 or 4, characterised in that a manoeuvring propeller (22) or the like is provided as the sole propulsion means at the stern of each body half (12, 13).

6. An oil collecting ship according to claims 3 or 4, characterised in that an additional manoeuvring drive (a jet or the like) is provided in the forepart of the ship.

FIG.1

FIG.2

0 110 942

1/2

FIG. 3